# EUROPEAN PATENT APPLICATION

(11) **EP 4 772 458 A1**
(43) Date of publication of application: **08.07.2026**
(21) Application number: 24876235.3
(22) Date of filing: 13.08.2024
(51) Int. Cl.: B65G 37/02

(54) **TRAY, BATTERY PRODUCTION LINE AND CONTROL METHOD**

(30) Priority: 13.10.2023 CN 202311323509
(71) Applicant: Contemporary Amperex Technology Co., Limited, Ningde, Fujian 352100 (CN)
(72) Inventor: XIA, Yijun, Ningde, Fujian 352100 (CN); GAO, Xitang, Ningde, Fujian 352100 (CN); SUN, Yanlin, Ningde, Fujian 352100 (CN); YU, Chenqin, Ningde, Fujian 352100 (CN); LIU, Hailong, Ningde, Fujian 352100 (CN); SUN, Zhiqiang, Ningde, Fujian 352100 (CN)
(74) Representative: Ziebig Hengelhaupt Intellectual Property Attorneys Patentanwaltskanzlei PartGmbB
(86) International application number: PCT/CN2024/111804
(87) International publication number: WO 2025/077415

(57) **Abstract**

A pallet, a battery production line, and a control method are provided. The pallet includes a pallet body, at least two first position-limiting assemblies, and a second position-limiting assembly. The pallet body includes a placement region configured to place a battery cell. One part of the first position-limiting assemblies is disposed on one side of the placement region along a first direction, and the other part of the first position-limiting assemblies is disposed on the other side. The first position-limiting assemblies include a first position-limiting block that is movable along the first direction. The first position-limiting block is provided with a first position-limiting surface and a second position-limiting surface. The second position-limiting assembly is disposed on a side of the placement region along a second direction. The second position-limiting assembly includes a second position-limiting block that is movable along the second direction. The second position-limiting block is provided with a third position-limiting surface. The second position-limiting surface and the third position-limiting surface are respectively located on opposite sides of the placement region along the second direction.

## Description

### CROSS-REFERENCE TO RELATED APPLICATIONS

The present disclosure claims priority to Chinese Patent Application No. 202311323509.5, filed with the China National Intellectual Property Administration on October 13, 2023 and entitled "PALLET, BATTERY PRODUCTION LINE, AND CONTROL METHOD", which is incorporated herein by reference in its entirety.

### TECHNICAL FIELD

Embodiments of the present disclosure relate to the field of battery production technologies, and specifically, to a pallet, a battery production line, and a control method.

### BACKGROUND

New energy batteries are more widely used in daily life and industrial fields. For example, new energy vehicles equipped with batteries have been widely used. In addition, batteries are increasingly used in the energy storage field and the like.

In a production process of a battery cell, a semi-finished product of the battery cell needs to be moved between different working positions for different procedures in the production process of the battery cell, so as to finally obtain a finished product of the battery cell.

In related technologies, a pallet is used to carry and fix a battery cell, to transfer the battery cell between working positions in a battery production line.

Battery cells of different types have different outer contour dimensions and shapes. Therefore, for production requirements of the battery cells of different types, different pallets need to be replaced to adapt to battery cells of different types. Consequently, production costs are increased, and the production efficiency is seriously affected due to the time required for pellet replacement.

### SUMMARY

In view of this, embodiments of the present disclosure expect to provide a pallet that can fix battery cells of different dimensions, a battery production line, and a control method.

To achieve the foregoing objectives, the technical solutions of the embodiments of the present disclosure are implemented in the following manners.

An embodiment of the present disclosure provides a pallet, configured to place a battery cell. The pallet includes:
a pallet body, including a placement region configured to place the battery cell;
at least two first position-limiting assemblies, disposed in the pallet body, where one part of the first position-limiting assemblies is disposed on one side of the placement region along a first direction, and the other part of the first position-limiting assemblies is disposed on the other side, the first position-limiting assemblies each include a first elastic assembly and a first position-limiting block that is movable along the first direction, and the first position-limiting block is provided with a first position-limiting surface configured to abut against the battery cell along the first direction and a second position-limiting surface configured to abut against the battery cell along a second direction; and
a second position-limiting assembly, disposed in the pallet body, where the second position-limiting assembly is disposed on a side of the placement region along the second direction, the second position-limiting assembly includes a second position-limiting block that is movable along the second direction, and the second position-limiting block is provided with a third position-limiting surface configured to abut against the battery cell along the second direction, where the first elastic assembly is disposed in the pallet body, the first elastic assembly includes a first driving end that is elastically telescopic along the first direction, and the first driving end is in driving connection with the first position-limiting block; and
the second position-limiting surface and the third position-limiting surface are respectively located on opposite sides of the placement region along the second direction, and the first direction intersects with the second direction.

The pallet in this embodiment of the present disclosure limits a position of the battery cell through fit among the first position-limiting surface, the second position-limiting surface, and the third position-limiting surface, to maintain stability of the position of the battery cell during movement of the pallet. A distance along the first direction between first position-limiting surfaces that are located on two sides of the placement region along the first direction is adjusted, so that the pallet can satisfy position-limiting requirements of battery cells of different types and quantities along the first direction. A distance along the second direction between the second position-limiting surface and the third position-limiting surface that are located on two sides of the placement region along the second direction is adjusted, so that the pallet can satisfy position-limiting requirements of battery cells of different types and quantities along the second direction. Therefore, battery cells of different types and quantities are carried and fixed on the pallet, and a use scenario of the pallet is expanded, thereby facilitating implementation of flexible production.

In this way, through elastic stretching or retracting of the first driving end along the first direction, the first position-limiting block can move toward the battery cell without an external driving apparatus, to abut against battery cells of different dimensions and quantities. In addition, a movement distance of the first position-limiting block can be steplessly changed along the first direction. Therefore, when fitness performance of the pallet is expanded, placement stability of the battery cell on the pallet body is improved by using pressure generated through abutting.

In some embodiments, the first elastic assembly includes an adapter plate and a gas spring. A piston cylinder of the gas spring is disposed in the pallet body. The adapter plate extends along the first direction. One end of the adapter plate along the first direction is connected to a piston rod of the gas spring, and the other end of the adapter plate is connected to the first position-limiting block, to enable the adapter plate to form the first driving end. A projection of the adapter plate at least partially coincides with a projection of the gas spring in a projection plane perpendicular to the first direction.

In this way, the gas spring is used, so that the first position-limiting block can stretch, retract, or move along the first direction, and an impact generated when the first position-limiting block abuts against the battery cell is cushioned. In addition, the projection of the gas spring at least partially coincides with the projection of the adapter plate, to help reduce an overall dimension of the first elastic assembly along the first direction, and improve layout compactness of the first elastic assembly.

In some embodiments, the adapter plate is located above the gas spring. In this way, the adapter plate can shield the gas spring, to reduce a probability that a foreign object falls and causes damage to the gas spring.

In some embodiments, the first elastic assembly includes a first toggle member, and the first toggle member is disposed on the adapter plate and rotatably connected to the adapter plate. In this way, on one hand, the first toggle member is pushed by an external force, to enable the adapter plate to move along the first direction, so that the first position-limiting block moves and the gas spring is compressed. On the other hand, the first toggle member is rotated, so that friction suffered by the first toggle member when the toggle member is pushed can be effectively reduced, thereby reducing wear of the first toggle member, and improving a service life of the first toggle member.

In some embodiments, the second position-limiting assembly includes a second elastic assembly. The second elastic assembly is disposed in the pallet body. The second elastic assembly includes a second driving end that is elastically telescopic along the second direction. The second driving end is in driving connection with the second position-limiting block.

In this way, through elastic stretching or retracting of the second driving end along the second direction, the second position-limiting block can move toward the battery cell without an external driving apparatus, to abut against battery cells of different dimensions and quantities. In addition, a movement distance of the second position-limiting block can be steplessly changed along the second direction. Therefore, when the fitness performance of the pallet is expanded, the placement stability of the battery cell on the pallet body is also improved by using the pressure generated through abutting.

In some embodiments, the second elastic assembly includes a driving block, a fixing base, and a spring. The fixing base is disposed in the pallet body. The spring is clamped between the fixing base and the driving block along the second direction. The driving block forms the second driving end. In this way, the spring is used, so that the second position-limiting block can stretch, retract, or move along the second direction, and an impact generated when the second position-limiting block abuts against the battery cell is cushioned.

In some embodiments, the pallet body includes a carrying plate and a placement block. The placement block is located on an upper surface of the carrying plate. The placement region is formed on an upper surface of the placement block. In this way, a position of the placement region can be raised, thereby reducing a probability that the battery cell collides with another component on the pallet when the battery cell is placed in the placement region and moves due to abutting, and facilitating reducing a contact area between the battery cell and the pallet body, reducing friction suffered by the battery cell during movement, and reducing a probability that the battery cell is jammed or a surface of the battery cell is scratched during movement.

In some embodiments, the first position-limiting assemblies include a plurality of supporting blocks. The supporting blocks extend along the first direction and are disposed on the upper surface of the carrying plate. The supporting blocks are arranged at intervals perpendicularly to the first direction. The first position-limiting block is disposed on upper surfaces of the supporting blocks and slidably fitted to the supporting blocks. At least a part of the placement block is located between the supporting blocks. Therefore, there is a coincidence region between a dimension of the placement block and a dimension of the supporting blocks along the first direction, to help reduce a dimension of the pallet along the first direction, so that a structure of the pallet is more compact.

In some embodiments, the first position-limiting block includes a mounting base, a first position-limiting portion, and a second position-limiting portion. The first position-limiting portion is located on a side of the mounting base facing the placement region. The first position-limiting portion extends perpendicularly to the first direction. The first position-limiting surface is formed on a surface of the first position-limiting portion facing the placement region. The second position-limiting portion is disposed on the mounting base and located on an end of the first position-limiting portion away from the second position-limiting assembly. The second position-limiting surface is formed on a surface of the second position-limiting portion facing the placement region.

In this way, through fit between the first position-limiting portion and the second position-limiting portion, the first position-limiting portion restrains displacement of the battery cell along the first direction and the second direction, so that placement stability of the battery cell on the pallet is improved.

In some embodiments, the second position-limiting assembly includes a mounting plate. The mounting plate is movable relative to the pallet body along the second direction. There are a plurality of second position-limiting blocks that are disposed on the mounting plate. The plurality of second position-limiting blocks are arranged at intervals perpendicularly to the second direction. In this way, this helps the second position-limiting blocks simultaneously abut against the battery cell, so that the battery cell evenly suffers a force along the second direction, and a probability that the battery cell rotates or a plurality of battery cells are separated due to an uneven force suffered by the battery cell is reduced.

In some embodiments, the pallet body is provided with an avoidance hole formed therethrough. The second position-limiting assembly includes a second toggle member. The second toggle member is disposed on the mounting plate. A projection of the second toggle member at least partially coincides with a projection of the avoidance hole in a projection plane perpendicular to a direction in which the avoidance hole is formed through the pallet body. A force may be applied to the second toggle member from a bottom of the pallet body, so that the second toggle member is driven to drive the mounting plate to move along the second direction, thereby reducing interference of components at an upper part of the pallet body.

In some embodiments, the mounting plate extends along the first direction, and the second position-limiting blocks are slidably fitted to the mounting plate along the first direction. Positions of the second position-limiting blocks are moved along the first direction, so that the second position-limiting blocks can still abut against, when a model and a quantity of the battery cell in which the second position-limiting blocks are placed change, the battery cell along the second direction, thereby limiting the position of the battery cell.

In some embodiments, the pallet includes a linkage assembly. The linkage assembly includes a guiding member and a restraining member. One of the guiding member and the restraining member is disposed in the first position-limiting block, and the other of the guiding member and the restraining member is disposed in the second position-limiting block. The guiding member is provided with a guiding slot. The guiding slot extends along the second direction. The restraining member is embedded in the guiding slot. The restraining member is in stopping fit with an inner wall of the guiding slot. In this way, when the linkage assembly is disposed, on one hand, synchronous movement between the first position-limiting block and the second position-limiting block along the first direction is implemented, an operation step of moving the first position-limiting block and the second position-limiting block is simplified, and operation efficiency is improved. On the other hand, the linkage assembly does not prevent the second position-limiting block from normally moving along the second direction.

In some embodiments, the restraining member is configured to be rotatable relative to the inner wall of the guiding slot. In this way, in a process in which the restraining member moves relative to the guiding member, friction suffered by the restraining member and the guiding member is reduced through rotation of the restraining member, thereby reducing wear of the restraining member and the guiding member, and improving service lives of the restraining member and the guiding member.

In some embodiments, the second position-limiting assembly includes a second auxiliary position-limiting block. The second auxiliary position-limiting block is disposed on the mounting plate. The second auxiliary position-limiting block is located between two second position-limiting assemblies. A side of the second auxiliary position-limiting block facing the placement region is at least configured to simultaneously abut against two adjacent battery cells along the second direction. In this way, a position of a part at which a plurality of battery cells are laminated can be limited along the second direction by using the second auxiliary position-limiting block, so that a probability that a position at which the battery cells are laminated is detached from the pallet due to a problem such as warping toward the second direction under an abutting force in the first direction is reduced, thereby helping the battery cell be stable on pallet.

In some embodiments, the pallet includes a first auxiliary position-limiting block. The first auxiliary position-limiting block is disposed in the pallet body. The first auxiliary position-limiting block is located between the two parts of the first position-limiting assemblies, and located on another side of the placement region opposite to the second position-limiting assembly. A side of the first auxiliary position-limiting block facing the placement region is at least configured to simultaneously abut against two adjacent battery cells along the second direction.

In this way, the position of the part at which the plurality of battery cells are laminated can be limited along the second direction by using the first auxiliary position-limiting block, so that the probability that the position at which the battery cells are laminated is detached from the pallet due to the problem such as warping toward the second direction under the abutting force in the first direction is reduced, thereby helping the battery cell be stable on pallet.

An embodiment of the present disclosure further provides a battery production line, configured to produce a battery. The battery production line includes:
the pallet in any one of the foregoing embodiments;
a first toggle assembly, configured to selectively push the first position-limiting block to move along the first direction; and
a second toggle assembly, configured to selectively push the second position-limiting block to move along the second direction.

In this way, the first toggle assembly pushes the first position-limiting block to move, to adjust a distance along the first direction between first position-limiting surfaces that are located on two sides of the placement region along the first direction, so that the pallet can satisfy position-limiting requirements of battery cells of different types and quantities along the first direction. The second toggle assembly pushes the second position-limiting block to move, to adjust a distance along the second direction between the second position-limiting surface and the third position-limiting surface that are located on two sides of the placement region along the second direction, so that the pallet can satisfy position-limiting requirements of battery cells of different types and quantities along the second direction. Therefore, battery cells of different types and quantities are carried and fixed on the pallet, and a use scenario of the pallet is expanded, thereby facilitating implementation of flexible production.

In some embodiments, the first toggle assembly is disposed on a side of the pallet perpendicular to the first direction. The first toggle assembly includes a first driving member, a second driving member, and a first pushing member. The second driving member is disposed at a driving end of the first driving member, to drive the second driving member to move along the first direction. The first pushing member is disposed at a driving end of the second driving member, to drive the first pushing member to stretch or retract perpendicularly to the first direction. The first pushing member can drive the first position-limiting block to move when the first pushing member is stretched.

In this way, through fit between the first driving member and the second driving member, the first pushing member selectively pushes the first position-limiting block to move along the first direction.

In some embodiments, the second toggle assembly is disposed below the pallet. The second toggle assembly includes a third driving member, a fourth driving member, and a second pushing member. The fourth driving member is in driving connection with a driving end of the third driving member, to drive the fourth driving member to stretch or retract in a third direction. The second pushing member is disposed at a driving end of the fourth driving member, to drive the second pushing member to move along the second direction. The second pushing member can drive the second position-limiting block to move along the second direction when the third driving member is upward stretched.

In this way, through fit between the third driving member and the fourth driving member, the second pushing member selectively pushes the second position-limiting block to move along the second direction.

In some embodiments, the pallet is provided with a positioning hole formed therethrough. The second toggle assembly includes a mounting member and a positioning pin. The fourth driving member and the positioning pin are both disposed on an upper surface of the mounting member. A lower surface of the mounting member is connected to the driving end of the third driving member. The positioning pin extends along the third direction. The positioning pin is inserted into the positioning hole when the third driving member is upward stretched.

In this way, through stopping fit between the positioning pin and an inner wall of the positioning hole, a movement tendency of the pallet in any direction perpendicular to the third direction is suppressed, so that a position of the pallet maintains stable.

In some embodiments, the second toggle assembly includes a fixing member and a guiding rod. The fixing member is fixedly disposed and located below the mounting member. The guiding rod extends along the third direction. A top end of the guiding rod is connected to the mounting member. The guiding rod penetrates through the fixing member. The guiding rod is provided with two stopping protrusions. The two stopping protrusions are arranged spaced away along the third direction. The fixing member is located between the two stopping protrusions and abuts against one of the stopping protrusions. The first direction and the second direction are both orthogonal to the third direction.

In this way, on one hand, movement of the mounting member along the third direction is guided by using the guiding column, so that a probability that the positioning pin cannot coordinate with the positioning hole due to deviated movement of the mounting member is reduced. On the other hand, a stroke of the movement of the mounting member along the third direction is limited by using the stopping protrusions, so that the mounting member does not collide with the pallet along the third direction.

An embodiment of the present disclosure further provides a control method, applied to the battery production line in the foregoing embodiments. The control method includes:
transferring a pallet to a preset operating position, and controlling a third driving member to drive a mounting member to move to a working position;
controlling a fourth driving member to drive a second pushing member to move along a second direction, to enable the second pushing member to abut against a second toggle member, until a second position-limiting block reaches a first preset position along a direction away from a placement region;
controlling a first driving member to drive a first pushing member to reversely move along a first direction, to enable the first pushing member to abut against a first toggle member, until the second position-limiting block reaches a third preset position along the direction away from the placement region;
placing a battery cell in the placement region;
controlling a second driving member to drive the first pushing member to retract, until the first pushing member and the first toggle member are separated, to enable a first elastic assembly to drive a first position-limiting block to move along the first direction, until the first position-limiting block abuts against the battery cell; and
controlling the third driving member to drive the mounting member to move downward, until the second pushing member and the second toggle member are separated, to enable a second elastic member to drive the second position-limiting block to move along the second direction, until a second position-limiting surface and a third position-limiting surface both abut against the battery cell.

According to the control method in this embodiment of the present disclosure, an objective that the first position-limiting block and the second position-limiting block both abut against the battery cell to limit movement of the battery cell is achieved, and the control method is adapted to placement of battery cells of different dimensions and quantities on the pallet.

In some embodiments, the pallet is provided with a positioning hole formed therethrough. A second toggle assembly includes a positioning pin. The positioning pin is inserted into the positioning hole when the mounting member is located at the working position.

In this way, stopping fit is implemented between the positioning pin and an inner wall of the positioning hole, so that a position of the pallet maintains stable.

In some embodiments, a projection of the second pushing member at least partially coincides with a projection of the second toggle member in a projection plane perpendicular to the second direction when the mounting member is located at the working position.

In this way, after moving along the second direction, the second pushing member can abut against the second toggle member, so that the second toggle member is pushed to move.

In some embodiments, before the controlling a first driving member to drive a first pushing member to reversely move along a first direction, the control method further includes:

controlling the first driving member to drive the second driving member to forwardly move along the first direction to a second preset position; and

controlling the second driving member to drive the first pushing member to stretch, to enable a projection of the first pushing member to at least partially coincide with a projection of the first toggle member in a projection plane perpendicular to the first direction.

In this way, the first pushing member can abut against the first toggle member along the first direction.

### BRIEF DESCRIPTION OF THE DRAWINGS

FIG. 1 is a schematic diagram of a pallet and a battery cell according to an embodiment of the present disclosure;
FIG. 2 is a schematic diagram of a pallet from a first visual angle according to an embodiment of the present disclosure;
FIG. 3 is a schematic diagram of the embodiment in FIG. 2 from a second visual angle;
FIG. 4 is a schematic diagram of the embodiment in FIG. 2 from a third visual angle;
FIG. 5 is a schematic diagram of the embodiment in FIG. 2 from a fourth visual angle;
FIG. 6 is a schematic diagram of a battery production line and a battery cell according to an embodiment of the present disclosure;
FIG. 7 is a schematic diagram of a first toggle assembly according to an embodiment of the present disclosure;
FIG. 8 is a schematic diagram of a second toggle assembly according to an embodiment of the present disclosure; and
FIG. 9 is a schematic diagram of steps of a control method according to an embodiment of the present disclosure.

### Descriptions of reference numerals:

pallet 10; positioning hole 10a; pallet body 11; placement region 11a; avoidance hole 11b; carrying plate 111; placement block 112; stopping block 113; first position-limiting assembly 12; first position-limiting block 121; first position-limiting surface 121a; second position-limiting surface 121b; mounting base 1211; first position-limiting portion 1212; second position-limiting portion 1213; first elastic assembly 122; first driving end 122a; adapter plate 1221; gas spring 1222; piston cylinder 1222a; piston rod 1222b; first toggle member 1223; supporting block 123; second position-limiting assembly 13; second position-limiting block 131; third position-limiting surface 131a; second elastic assembly 132; second driving end 132a; driving block 1321; fixing base 1322; spring 1323; mounting plate 134; second toggle member 135; second auxiliary position-limiting block 136; first auxiliary position-limiting block 14; linkage assembly 15; guiding member 151; guiding slot 151a; restraining member 152; battery cell 20; first toggle assembly 30; first driving member 31; second driving member 32; first pushing member 33; second toggle assembly 40; third driving member 41; fourth driving member 42; second pushing member 43; mounting member 44; positioning pin 45; fixing member 46; guiding rod 47; and stopping protrusion 471.

### DETAILED DESCRIPTION

It should be noted that in case of no conflicts, embodiments of the present disclosure and the technical features of the embodiments can be combined with each other. Detailed descriptions in specific implementations should be understood as explanations and descriptions of objectives of the present disclosure, and should not be considered as improper limitations to the present disclosure.

Unless otherwise defined, all of the technical and scientific terms used in the present disclosure have the same meanings as those understood by persons skilled in the art in the technical field of the present disclosure. The terms used in the present disclosure are merely for the purpose of describing specific embodiments, rather than for limiting the present disclosure; the terms "including" and "having" and any variation thereof in the descriptions and the foregoing descriptions of the accompanying drawings of the present disclosure intend to encompass non-exclusive inclusions.

In the descriptions of the embodiments of the present disclosure, the terms "first", "second", "third", and the like are merely intended to distinguish between different objects, and shall not be understood as an indication or implication of relative importance or implicit indication of the number, specific sequence or dominant-subordinate relationship of indicated technical features. In the descriptions of the embodiments of the present disclosure, "a plurality of" means two or more unless otherwise clearly defined.

The term "embodiment" in the present disclosure means that specific characteristics, structures or properties described in combination with embodiments can be included in at least one embodiment of the present disclosure. Appearances of the phrase in various locations in this specification are not necessarily all referring to a same embodiment, nor are separate or alternative embodiments mutually exclusive of another embodiment. It is explicitly and implicitly understood by a person skilled in the art that the embodiments described in the present disclosure may be combined with another embodiment.

In the descriptions of the embodiments of the present disclosure, the term "and/or" describes only an association relationship for describing associated objects and represents that three relationships may exist. For example, A and/or B may represent the following three cases: A alone, both A and B, and B alone. In addition, in the present disclosure, the character "/" usually indicates an "or" relationship between the associated objects.

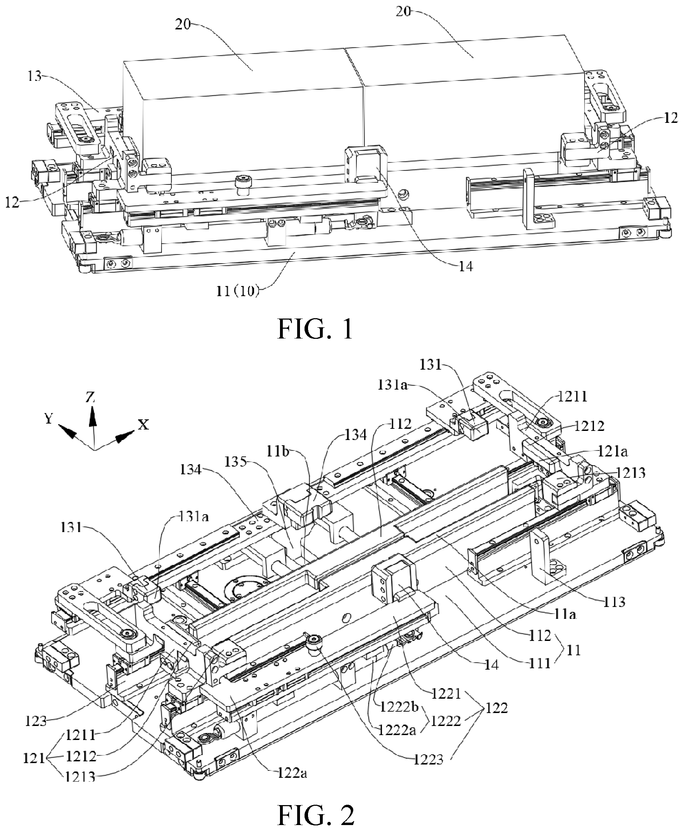

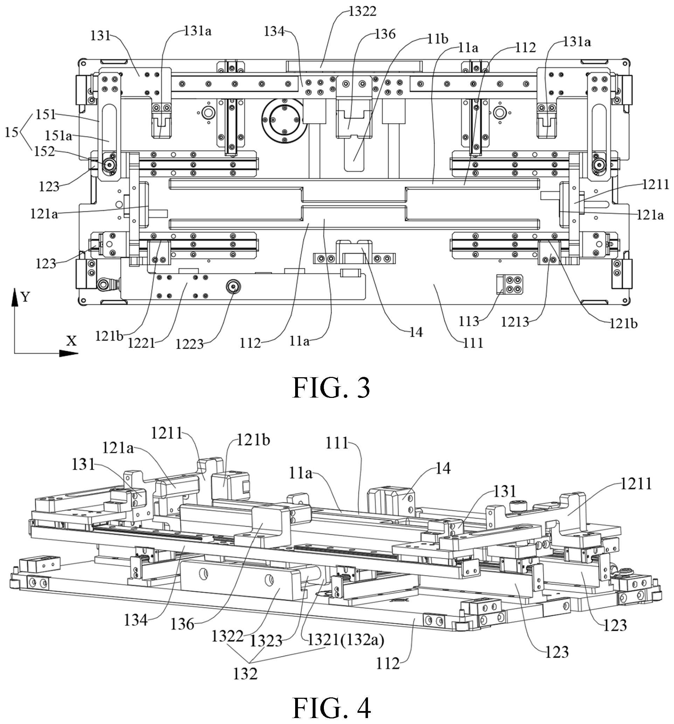

In the descriptions of the embodiments of the present disclosure, for ease of description, as shown by arrows in FIG. 2 and FIG. 3, a direction of an arrow X is a first direction, and a direction of an arrow Y is a second direction. As shown by arrows in FIG. 2, FIG. 6, and FIG. 8, a direction of an arrow Z is a third direction. Directions to which the arrow Z points along the third direction are referred to as "up" and "top", and directions opposite thereto are referred to as "down" and "bottom".

In the descriptions of the embodiments of the present disclosure, unless otherwise clearly specified and defined, the technical terms "installed", "connected to", "connected with", "fixed" or the like should be interpreted in a broad sense. For example, a connection may refer to a fixed connection, a disassembly connection or an integral connection; or may refer to a mechanical connection or an electrical connector; or may refer to a direct connection or an indirect connection through an intermediate medium; or may refer to an internal communication between the two elements or the interaction relationship between the two elements. A person of ordinary skill in the art can understand specific meanings of these terms in the embodiments of the present disclosure based on specific situations.

In the descriptions of the embodiments of the present disclosure, unless otherwise clearly specified and defined, the technical term "contact" should be interpreted in a broad sense, and may be direct contact, or may be contact through an intermediate medium layer, may be contact with almost no interaction force between the two that are in contact, or may be contact with an interaction force between the two that are in contact.

The embodiments of the present disclosure are described in detail below.

In a process in which a battery cell is transferred in a battery production line, the battery cell is carried by a pallet under an effect of gravity. However, in a horizontal direction, a position of the battery cell needs to be limited, to help suppress, during movement of the pallet, a movement tendency that the battery cell moves relative to the pallet along the horizontal direction. However, battery cells of different types have different outline dimensions and shapes. Therefore, a limited position that is fixed cannot be adapted to positioning requirements of the battery cells of different types.

An embodiment of the present disclosure is intended to provide a pallet that limits, by using a first position-limiting assembly and a second position-limiting assembly, displacement in a first direction and a second direction of a battery cell placed on the pallet. In addition, positions at which the first position-limiting assembly and the second position-limiting assembly respectively abut against the battery cell are adjusted, to adapt to requirements of battery cells of different types.

An embodiment of the present disclosure provides a pallet 10, configured to place a battery cell 20. Refer to FIG. 1 to FIG. 4, the pallet 10 includes a pallet body 11, a second position-limiting assembly 13, and at least two first position-limiting assemblies 12.

The pallet body 11 includes a placement region 11a configured to place the battery cell 20.

The first position-limiting assemblies 12 are disposed in the pallet body 11. One part of the first position-limiting assemblies 12 is disposed on one side of the placement region 11a along a first direction, and the other part of the first position-limiting assemblies 12 is disposed on the other side. The first position-limiting assemblies 12 include a first position-limiting block 121 that is movable along the first direction. The first position-limiting block 121 is provided with a first position-limiting surface 121a configured to abut against the battery cell 20 along the first direction and a second position-limiting surface 121b configured to abut against the battery cell 20 along a second direction.

The second position-limiting assembly 13 is disposed in the pallet body 11. The second position-limiting assembly 13 is disposed on a side of the placement region 11a along the second direction. The second position-limiting assembly 13 includes a second position-limiting block 131 that is movable along the second direction. The second position-limiting block 131 is provided with a third position-limiting surface 131a configured to abut against the battery cell 20 along the second direction.

The second position-limiting surface 121b and the third position-limiting surface 131a are respectively located on opposite sides of the placement region 11a along the second direction.

The pallet body 11 provides mounting positions for the battery cell 20 and another component in the pallet 10.

The placement region 11a is for carrying the battery cell 20, in other words, limiting a position of the battery cell 20 along a gravity direction.

On one hand, the first position-limiting assemblies 12 are configured to limit movement of the battery cell 20 placed in the placement region 11a along the first direction. Specifically, one part of the first position-limiting assemblies 12 is disposed on the side of the placement region 11a along the first direction, and the first position-limiting surface 121a on the first position-limiting assembly 12 is configured to abut against the battery cell 20 along a forward direction of the first direction, to limit a movement tendency of the battery cell 20 along the forward direction of the first direction. The other part of the first position-limiting assemblies 12 is disposed on the other side, and the first position-limiting surface 121a on the first position-limiting assembly 12 is configured to abut against the battery cell 20 along a backward direction of the first direction, to limit a movement tendency of the battery cell 20 along the backward direction of the first direction.

On the other hand, the first position-limiting assemblies 12 and the second position-limiting assembly 13 coordinate with each other, to limit movement of the battery cell 20 placed in the placement region 11a along the second direction. Specifically, the second position-limiting surface 121b of the first position-limiting assembly 12 is located on one side of the placement region 11a along the second direction, and the second position-limiting surface 121b is configured to abut against the battery cell 20 along a forward direction of the second direction. The third position-limiting surface 131a of the second position-limiting assembly 13 is located on the other side of the placement region 11a along the second direction, and the third position-limiting surface 131a is configured to abut against the battery cell 20 along the forward direction of the second direction.

It should be noted that the forward direction and the backward direction respectively refer to different directions of a same linear direction.

The first position-limiting block 121 is provided with the first position-limiting surface 121a and the second position-limiting surface 121b, so that the first position-limiting block 121 can have a position limiting function in both the first direction and the second direction, to help simplify a quantity of components of the pallet 10, and therefore, a structure of the pallet 10 is more compact.

The first position-limiting block 121 is movable along the first direction. In this way, a distance along the first direction between first position-limiting surfaces 121a that are located on two sides of the placement region 11a along the first direction can be adjusted through movement of the first position-limiting blocks 121 of the first position-limiting assemblies 12 located on two sides of the placement region 11a.

The second position-limiting block 131 of the second position-limiting assembly 13 is movable along the second direction, and the second position-limiting surface 121b and the third position-limiting surface 131a are oppositely arranged along the second direction. In this way, a distance along the second direction between the second position-limiting surface 121b and the third position-limiting surface 131a that are located on two sides of the placement region 11a along the second direction can be adjusted by moving the second position-limiting block 131.

The pallet 10 in this embodiment of the present disclosure limits a position of the battery cell 20 through fit among the first position-limiting surface 121a, the second position-limiting surface 121b, and the third position-limiting surface 131a, to maintain stability of the position of the battery cell 20 during movement of the pallet 10. The distance along the first direction between the first position-limiting surfaces 121a that are located on the two sides of the placement region 11a along the first direction is adjusted, so that the pallet 10 can satisfy position-limiting requirements of battery cells 20 of different types and quantities along the first direction. The distance along the second direction between the second position-limiting surface 121b and the third position-limiting surface 131a that are located on the two sides of the placement region 11a along the second direction is adjusted, so that the pallet 10 can satisfy position-limiting requirements of battery cells 20 of different types and quantities along the second direction. Therefore, battery cells 20 of different types and quantities are carried and fixed on the pallet 10, and a use scenario of the pallet 10 is expanded, thereby facilitating implementation of flexible production.

The battery in this embodiment of the present disclosure may be used in, but not limited to, a power consuming apparatus such as an energy storage power supply system, a vehicle, a ship, or an aircraft.

The battery includes a plurality of battery cells 20. The battery cell 20 may be a secondary battery. The secondary battery is a battery cell 20 that can activate an active material through charging after the battery cell 20 is discharged, to continue to use the battery cell 20.

The battery cell 20 may be a lithium-ion battery, a sodium-ion battery, a sodium-lithium-ion battery, a lithium metal battery, a sodium metal battery, a lithium-sulfur battery, a magnesium-ion battery, a nickel-metal hydride battery, a nickel-cadmium battery, a lead-acid battery, or the like. This is not limited in this embodiment of the present disclosure.

For example, the battery cell 20 may be a cylindrical battery cell, a prismatic battery cell, a soft pack battery cell, or a battery cell of another shape. The prismatic battery cell includes a square-case battery cell, a blade-shaped battery cell, or a multi-prismatic battery. The multi-prismatic battery is, for example, a hexagonal prismatic battery. This is not particularly limited in this embodiment of the present disclosure.

The pallet 10 in some embodiments of the present invention is described in detail below.

In some embodiments, an RFID (Radio Frequency Identification, radio frequency identification) chip is disposed on the pallet body 11, and is configured to detect whether the battery cell 20 placed on the pallet body 11 is of a required model.

It may be understood that the first direction intersects with the second direction.

It may be understood that, in some embodiments, the first direction and the second direction are orthogonal, and are both perpendicular to the gravity direction. In other words, the first direction and the second direction each are any direction on a plane perpendicular to the gravity direction.

It may be understood that specific shapes of the first position-limiting surface 121a, the second position-limiting surface 121b, and the third position-limiting surface 131a are not limited, and the shapes thereof are adapted to an outer contour shape of the battery cell 20. For example, if the battery cell 20 is square, the first position-limiting surface 121a, the second position-limiting surface 121b, and the third position-limiting surface 131a are all planes. For another example, if the battery cell 20 is a cylinder, the first position-limiting surface 121a, the second position-limiting surface 121b, and the third position-limiting surface 131a may be arc surfaces, or may be planes.

In some embodiments, quantities of the first position-limiting assemblies 12 located on the two sides of the placement region 11a along the first direction are the same, to help the battery cell 20 evenly suffer a force along the first direction.

Refer to FIG. 1, one first position-limiting assembly 12 is located on each of the two sides of the placement region 11a along the first direction.

In some embodiments, a projection of the second position-limiting surface 121b at least partially coincides with a projection of the third position-limiting surface 131a in a projection plane perpendicular to the second direction, to help the battery cell 20 evenly suffer a force along the second direction.

A specific manner of moving the first position-limiting block 121 toward the battery cell 20 after the battery cell 20 is placed in the placement region 11a, until the first position-limiting surface 121a abuts against the battery cell 20, is not limited.

For example, refer to FIG. 2, the first position-limiting assemblies 12 each include a first elastic assembly 122. The first elastic assembly 122 is disposed in the pallet body 11. The first elastic assembly 122 includes a first driving end 122a that is elastically telescopic along the first direction. The first driving end 122a is in driving connection with the first position-limiting block 121.

That the first driving end 122a is elastically telescopic means that the first driving end 122a can be stretched or retracted away from an initial position under an external force, and elastic potential energy is accumulated in the first elastic assembly 122. After the external force is eliminated, the elastic potential energy is released, and the first driving end 122a moves under the elastic potential energy, and performs movement back to the initial position.

The first position-limiting block 121 is moved by the external force, so that the elastic potential energy is accumulated in the first elastic assembly 122 when a distance between first position-limiting surfaces 121a spaced away along the first direction satisfies a requirement along the first direction of the battery cell 20 that needs to be placed. After the battery cell 20 is placed in the placement region 11a, the applied external force is eliminated, the elastic potential energy is released, and the first driving end 122a drives the first position-limiting block 121 to move toward the battery cell 20, until the first position-limiting surfaces 121a abut against the battery cell 20, so that a position of the first position-limiting block 121 is locked.

In this way, through elastic stretching or retracting of the first driving end 122a along the first direction, the first position-limiting block 121 can move toward the battery cell 20 without an external driving apparatus, to abut against battery cells 20 of different dimensions and quantities. In addition, a movement distance of the first position-limiting block 121 can be steplessly changed along the first direction. Therefore, when fitness performance of the pallet 10 is expanded, placement stability of the battery cell 20 on the pallet body 11 is improved by using pressure generated through abutting.

A specific structural form of the first elastic assembly 122 is not limited.

For example, refer to FIG. 2, the first elastic assembly 122 includes an adapter plate 1221 and a gas spring 1222. A piston cylinder 1222a of the gas spring 1222 is disposed in the pallet body 11. The adapter plate 1221 extends along the first direction. One end of the adapter plate 1221 along the first direction is connected to a piston rod 1222b of the gas spring 1222, and the other end of the adapter plate 1221 is connected to the first position-limiting block 121, to enable the adapter plate 1221 to form the first driving end 122a. A projection of the adapter plate 1221 at least partially coincides with a projection of the gas spring 1222 in a projection plane perpendicular to the first direction.

The gas spring 1222 seals high-pressure gas inside the piston cylinder 1222a. The movable piston rod 1222b penetrates through one end of the piston cylinder 1222a. An external force drives the piston rod 1222b to move to compress the gas. When the external force disappears, the compressed gas expands to drive the piston rod 1222b to stretch, and provides an elastic force. In other words, the gas spring 1222 is configured to accumulate the elastic potential energy.

A large elastic force can be achieved by using the gas spring 1222 with a small volume, and a large initial elastic force can be provided without pre-tightening. In a process in which the gas spring 1222 is stretched or retracted along the first direction, a change of an elastic acting force provided by the gas spring 1222 is small, thereby helping reduce a probability of damaging the battery cell 20.

In this way, the gas spring 1222 is used, so that the first position-limiting block 121 can stretch, retract, or move along the first direction, and an impact generated when the first position-limiting block 121 abuts against the battery cell 20 is cushioned. In addition, the projection of the gas spring 1222 at least partially coincides with the projection of the adapter plate, to help reduce an overall dimension of the first elastic assembly 122 along the first direction, and improve layout compactness of the first elastic assembly 122.

The piston rod 1222b of the gas spring 1222 is hinged to the adapter plate 1221. In this way, two ends of the gas spring 1222 can respectively rotate, thereby improving a degree of freedom of the gas spring 1222, and reducing probabilities of problems such as impeded stretching or retracting and jamming during stretching or retracting of the gas spring 1222.

When the battery cell 20 is square, because a dimension of the battery cell 20 is large in a length direction, an accumulative error of production and assembly is largest in the length direction.

In some embodiments, the first direction is the length direction of the battery cell 20, and the second direction is a width direction or a height direction of the battery cell 20. In this way, the gas spring 1222 is disposed to enable the first position-limiting block 121 to have a large movement stroke along the first direction. In addition, the first position-limiting blocks 121 on two sides of the first direction are both movable, so that the pallet 10 has a large adjustment range in the first direction.

In some embodiments, refer to FIG. 2, the first position-limiting assembly 12 on one side of the first direction is provided with the first elastic assembly 122, and the first position-limiting assembly 12 on the other side is not provided with the first elastic assembly 122. In this way, when the first position-limiting block 121 automatically abuts against the battery cell 20, it is beneficial to reduce a quantity of components and reduce costs.

It may be understood that, pushed by the first position-limiting block 121 on one side, the battery cell 20 is slidable along the first direction, until the other side of the battery cell 20 abuts against the first position-limiting block 121 on the other side.

In some embodiments, refer to FIG. 2, the adapter plate 1221 is located above the gas spring 1222. In this way, the adapter plate 1221 can shield the gas spring 1222, to reduce a probability that a foreign object falls and causes damage to the gas spring 1222.

In some embodiments, refer to FIG. 2 and FIG. 3, a stopping block 113 is disposed on the pallet body 11. The stopping block 113 is located on a side of the gas spring 1222 along the first direction, to abut against the piston rod 1222b when the gas spring 1222 is stretched, thereby limiting a stretching stroke of the gas spring 1222 along the first direction.

In some embodiments, refer to FIG. 2 and FIG. 3, the first elastic assembly 122 includes a first toggle member 1223, and the first toggle member 1223 is disposed on the adapter plate 1221 and rotatably connected to the adapter plate 1221. In this way, on one hand, the first toggle member 1223 is pushed by an external force, to enable the adapter plate 1221 to move along the first direction, so that the first position-limiting block 121 moves and the gas spring 1222 is compressed. On the other hand, the first toggle member 1223 is rotated, so that friction suffered by the first toggle member 1223 when the toggle member is pushed can be effectively reduced, thereby reducing wear of the first toggle member 1223, and improving a service life of the first toggle member 1223.

In some embodiments, refer to FIG. 2 and FIG. 3, the first elastic assembly 122 is located on a side of the first position-limiting assembly 12 away from the second position-limiting assembly 13 along the second direction, to avoid interference between movement of the second elastic assembly 132 and movement of the second position-limiting assembly 13.

A specific type of the first toggle member 1223 is not limited. For example, the first toggle member 1223 is a ball bearing.

A specific manner of moving the second position-limiting block 131 toward the battery cell 20 after the battery cell 20 is placed in the placement region 11a, until the second position-limiting surface 121b and the third position-limiting surface 131a respectively abut against the battery cell 20, is not limited.

For example, refer to FIG. 3 and FIG. 4, the second position-limiting assembly 13 includes a second elastic assembly 132. The second elastic member is disposed in the pallet body 11. The second elastic assembly 132 includes a second driving end 132a that is elastically telescopic along the second direction. The second driving end 132a is in driving connection with the second position-limiting block 131.

That the second driving end 132a is elastically telescopic means that the second driving end 132a can be stretched or retracted away from an initial position under an external force, and elastic potential energy is accumulated in the second elastic assembly 132. After the external force is eliminated, the elastic potential energy is released, and the second driving end 132a moves under the elastic potential energy, and performs movement back to the initial position.

The second position-limiting block 131 is moved by the external force, so that the elastic potential energy is accumulated in the second elastic assembly 132 when a distance between the second position-limiting surface 121b and the third position-limiting surface 131a spaced away along the second direction satisfies a requirement along the second direction of the battery cell 20 that needs to be placed. After the battery cell 20 is placed in the placement region 11a, the applied external force is eliminated, the elastic potential energy is released, and the second driving end 132a drives the second position-limiting block 131 to move toward the battery cell 20, until the second position-limiting surface 121b and the third position-limiting surface 131a abut against the battery cell 20, so that a position of the second position-limiting block 131 is locked.

In this way, through elastic stretching or retracting of the second driving end 132a along the second direction, the second position-limiting block 131 can move toward the battery cell 20 without an external driving apparatus, to abut against battery cells 20 of different dimensions and quantities. In addition, a movement distance of the second position-limiting block 131 can be steplessly changed along the second direction. Therefore, when fitness performance of the pallet 10 is expanded, placement stability of the battery cell 20 on the pallet body 11 is also improved by using pressure generated through abutting.

That the second driving end 132a is in driving connection with the second position-limiting block 131 may refer to that the second driving end 132a is directly connected to the second position-limiting block 131, or may refer to that a driving force is transmitted by using another component, instead of direct connection between the second driving end 132a and the second position-limiting block 131.

It may be understood that, pushed by the second position-limiting block 131 on one side along the second direction, the battery cell 20 is slidable along the second direction, until the other side of the battery cell 20 abuts against the second position-limiting surface 121b.

A specific structural form of the second elastic assembly 132 is not limited.

Refer to FIG. 4, the second elastic assembly 132 includes a driving block 1321, a fixing base 1322, and a spring 1323. The fixing base 1322 is disposed in the pallet body 11. The spring 1323 is clamped between the fixing base 1322 and the driving block 1321 along the second direction. The driving block 1321 forms the second driving end 132a.

The fixing base 1322 is fixed to the pallet body 11, and abuts against the spring 1323 along the second direction.

A telescoping direction of the spring 1323 is the second direction.

The driving block 1321 is movable relative to the pallet body 11, and abuts against the spring 1323 along the second direction. Therefore, movement of the driving block 1321 along the second direction is implemented through stretching or retracting of the spring 1323.

In this way, the spring 1323 is used, so that the second position-limiting block 131 can stretch, retract, or move along the second direction, and an impact generated when the second position-limiting block 131 abuts against the battery cell 20 is cushioned.

A specific type of the spring 1323 is not limited, and may be, for example, a compression spring 1323.

In some embodiments, refer to FIG. 2 and FIG. 3, the pallet body 11 includes a carrying plate 111 and a placement block 112. The placement block 112 is located on an upper surface of the carrying plate 111. The placement region 11a is formed on an upper surface of the placement block 112.

The carrying plate 111 is configured to place and mount another component in the pallet 10.

The placement block 112 is configured to place the battery cell 20.

In this way, a position of the placement region 11a can be raised, thereby reducing a probability that the battery cell 20 collides with another component on the pallet 10 when the battery cell 20 is placed in the placement region 11a and moves due to abutting, and facilitating reducing a contact area between the battery cell 20 and the pallet body 11, reducing friction suffered by the battery cell 20 during movement, and reducing a probability that the battery cell 20 is jammed or a surface of the battery cell 20 is scratched during movement.

In some embodiments, refer to FIG. 2 to FIG. 4, the first position-limiting assemblies 12 includes a plurality of supporting blocks 123. The supporting blocks 123 extend along the first direction and are disposed on the upper surface of the carrying plate 111. The supporting blocks 123 are arranged at intervals perpendicularly to the first direction. The first position-limiting block 121 is disposed on upper surfaces of the supporting blocks 123 and slidably fitted to the supporting blocks 123. At least a part of the placement block 112 is located between the supporting blocks 123.

The supporting blocks 123 are slidably fitted to the first position-limiting block 121, to guide movement of the first position-limiting block 121.

At least a part of the placement block 112 is located between the supporting blocks 123. Therefore, there is a coincidence region between a dimension of the placement block 112 and a dimension of the supporting blocks 123 along the first direction, to help reduce a dimension of the pallet 10 along the first direction, so that a structure of the pallet 10 is more compact.

It may be understood that the first position-limiting block 121 straddles the supporting blocks 123, to help evenly distribute a weight of the first position-limiting block 121 to the supporting blocks 123, thereby helping the first position-limiting block 121 maintain stable during movement.

A specific manner of the sliding fit between the first position-limiting block 121 and the supporting blocks 123 is not limited. For example, a ball sliding block is disposed at a bottom of the first position-limiting block 121, and a guide rail is disposed on the upper surface of the supporting blocks 123. The guide rail extends along the first direction. The guide rail and the ball sliding block coordinate with each other, so that friction suffered by the first position-limiting block 121 during movement along the first direction is effectively reduced.

A specific structural form of the first position-limiting block 121 is not limited.

For example, refer to FIG. 2, the first position-limiting block 121 includes a mounting base 1211, a first position-limiting portion 1212, and a second position-limiting portion 1213. The first position-limiting portion 1212 is located on a side of the mounting base 1211 facing the placement region 11a. The first position-limiting portion 1212 extends perpendicularly to the first direction. The first position-limiting surface 121a is formed on a surface of the first position-limiting portion 1212 facing the placement region 11a. The second position-limiting portion 1213 is disposed on the mounting base 1211 and located on an end of the first position-limiting portion 1212 away from the second position-limiting assembly 13. The second position-limiting surface 121b is formed on a surface of the second position-limiting portion 1213 facing the placement region 11a.

In this way, through fit between the first position-limiting portion 1212 and the second position-limiting portion 1213, the first position-limiting portion 1212 restrains displacement of the battery cell 20 along the first direction and the second direction, so that placement stability of the battery cell 20 on the pallet 10 is improved.

In some embodiments, refer to FIG. 3, the first position-limiting portion 1212 and the second position-limiting portion 1213 are disposed spaced away, to reduce a probability that the first position-limiting surface 121a or the second position-limiting surface 121b cannot abut against the battery cell 20 because the first position-limiting block 121 and the battery cell 20 are positioned.

In some embodiments, the first position-limiting portion 1212 is detachably connected to the mounting base 1211, so that the first position-limiting portion 1212 that is seriously worn can be separately replaced after long-term use, thereby prolonging a service life of the pallet 10.

In some embodiments, the second position-limiting portion 1213 is detachably connected to the mounting base 1211, so that the second position-limiting portion 1213 that is seriously worn can be separately replaced after long-term use, thereby prolonging the service life of the pallet 10.

In some embodiments, refer to FIG. 2 to FIG. 4, the second position-limiting assembly 13 includes a mounting plate 134. The mounting plate 134 is movable relative to the pallet body 11 along the second direction. There are a plurality of second position-limiting blocks 131 that are disposed on the mounting plate 134. The plurality of second position-limiting blocks 131 are arranged at intervals perpendicularly to the second direction.

The mounting plate 134 is driven to move along the second direction, so that the second position-limiting blocks 131 can synchronously move along the second direction. In this way, this helps the second position-limiting blocks 131 simultaneously abut against the battery cell 20, so that the battery cell 20 evenly suffers a force along the second direction, and a probability that the battery cell 20 rotates or a plurality of battery cells 20 are separated due to an uneven force suffered by the battery cell 20 is reduced.

For example, the mounting plate 134 is slidably fitted to the pallet body 11. A specific manner of implementing the sliding fit between the mounting plate 134 and the pallet body 11 is not limited.

It may be understood that third position-limiting surfaces 131a on the second position-limiting blocks 131 are level with each other.

A specific quantity of the second position-limiting blocks 131 is not limited, which is, for example, two, three, or four.

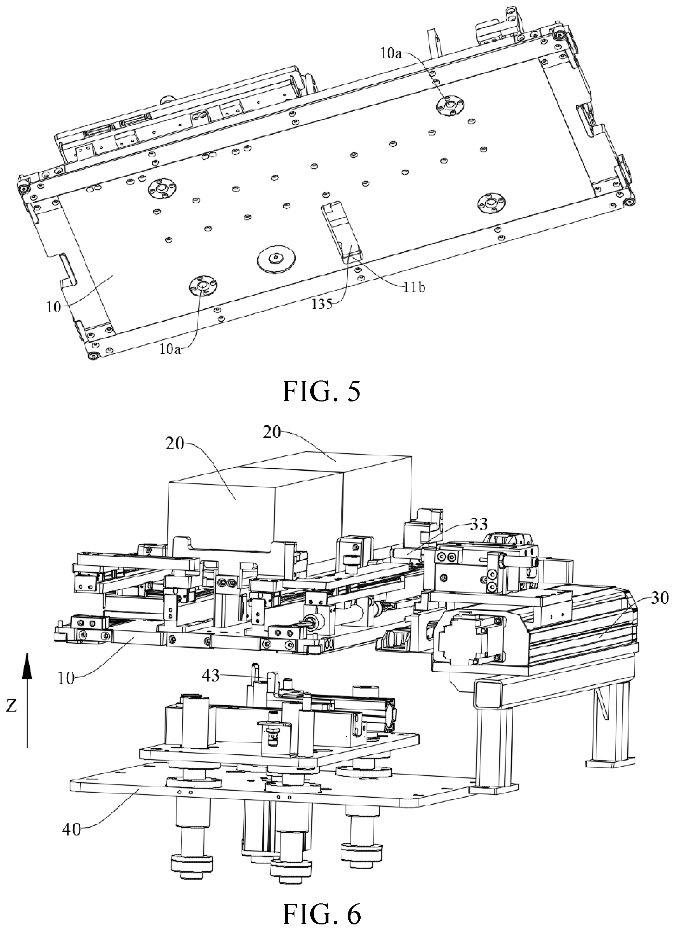

In some embodiments, refer to FIG. 3 and FIG. 5, the pallet body 11 is provided with an avoidance hole 11b formed therethrough. The second position-limiting assembly 13 includes a second toggle member 135. The second toggle member 135 is disposed on the mounting plate 134. A projection of the second toggle member 135 at least partially coincides with a projection of the avoidance hole 11b in a projection plane perpendicular to a direction in which the avoidance hole 11b is formed through the pallet body 11.

In other words, an acting force may be applied to the second toggle member 135 from a bottom of the pallet body 11, so that the second toggle member 135 is driven to drive the mounting plate 134 to move along the second direction, thereby reducing interference of components at an upper part of the pallet body 11.

It may be understood that the second toggle member 135 may be pushed through the avoidance hole 11b from the bottom of the pallet body 11. Alternatively, the second toggle member 135 extends into the avoidance hole 11b, so that the second toggle member 135 is pushed in the avoidance hole 11b when the second toggle member 135 extends into the avoidance hole 11b from the bottom of the pallet body 11.

In some embodiments, refer to FIG. 5, the second toggle member 135 is located at a middle position of a mounting member 44 perpendicular to the second direction, so that the mounting member 44 evenly suffers a force in a process in which the second toggle member 135 is pushed, thereby reducing a probability that the mounting member 44 is jammed during movement.

In an embodiment in which the carrying plate 111 is disposed, the avoidance hole 11b is disposed on the carrying plate 111, and the avoidance hole 11b extends along a thickness direction of the carrying plate 111.

In an embodiment in which the second elastic assembly 132 is disposed, refer to FIG. 2, the driving block 1321 is connected to the mounting plate 134. In this way, through stretching or retracting of the spring 1323, the mounting plate 134 is driven to move along the second direction, thereby achieving an objective that the second position-limiting block 131 maintains abutting against the battery cell 20.

In some embodiments, refer to FIG. 3, the mounting plate 134 extends along the first direction, and the second position-limiting blocks 131 are slidably fitted to the mounting plate 134 along the first direction.

In other words, the second position-limiting blocks 131 are movable along the first direction.

Due to changes of a model and a quantity of the battery cell 20 placed on the pallet 10, a total dimension of the battery cell 20 along the first direction also changes correspondingly. Therefore, positions of the second position-limiting blocks 131 are moved along the first direction, so that the second position-limiting blocks 131 can still abut against, when a model and a quantity of the battery cells 20 in which the second position-limiting blocks 131 are placed change, the battery cell 20 along the second direction, thereby limiting the position of the battery cell 20.

It may be understood that movement of the second position-limiting blocks 131 along the first direction should be adapted to a distance between first position-limiting surfaces 121a on two sides of the first direction.

In some embodiments, refer to FIG. 3, the pallet 10 includes a linkage assembly 15. The linkage assembly 15 includes a guiding member 151 and a restraining member 152. One of the guiding member 151 and the restraining member 152 is disposed in the first position-limiting block 121, and the other of the guiding member 151 and the restraining member 152 is disposed in the second position-limiting block 131. The guiding member 151 is provided with a guiding slot 151a. The guiding slot 151a extends along the second direction. The restraining member 152 is embedded in the guiding slot 151a. The restraining member 152 is in stopping fit with an inner wall of the guiding slot 151a.

In a process in which the first position-limiting block 121 moves along the first direction, the restraining member 152 abuts against the inner wall of the guiding slot 151a, so that an acting force along the first direction is generated, thereby pushing the second position-limiting block 131 to move along the first direction.

In this way, when the linkage assembly 15 is disposed, on one hand, synchronous movement between the first position-limiting block 121 and the second position-limiting block 131 along the first direction is implemented, an operation step of moving the first position-limiting block 121 and the second position-limiting block 131 is simplified, and operation efficiency is improved. On the other hand, the linkage assembly 15 does not prevent the second position-limiting block 131 from normally moving along the second direction.

It may be understood that a dimension of the guiding slot 151a along the second direction is not less than a movement stroke of the mounting plate 134 along the second direction.

In some embodiments, refer to FIG. 3, a position at which the linkage assembly 15 is connected to the first position-limiting block 121 is located on a side of the first position-limiting block 121 away from the first position-limiting surface 121a, to avoid interference between the battery cell 20 and relative movement that is between the guiding member 151 and the restraining member 152.

It may be understood that the linkage assembly 15 is detachably configured, to replace the guiding member 151 and the restraining member 152 after the guiding member 151 and the restraining member 152 are worn, thereby prolonging the service life of the pallet 10.

In some embodiments, the restraining member 152 is configured to be rotatable relative to the inner wall of the guiding slot 151a. In this way, in a process in which the restraining member 152 moves relative to the guiding member 151, friction suffered by the restraining member 152 and the guiding member 151 is reduced through rotation of the restraining member 152, thereby reducing wear of the restraining member 152 and the guiding member 151, and improving service lives of the restraining member 152 and the guiding member 151.

A specific manner in which the restraining member 152 is rotatably configured is not limited. For example, the restraining member 152 is a rolling bearing.

It may be understood that, when a plurality of battery cells 20 are placed on the pallet 10, a problem such as warping easily occurs at a joint position between the plurality of battery cells 20 under an external force, which is adverse to maintaining stable by the battery cells 20 on the pallet 10.

In some embodiments, refer to FIG. 3 and FIG. 4, the second position-limiting assembly 13 includes a second auxiliary position-limiting block 136. The second auxiliary position-limiting block 136 is disposed on the mounting plate 134. The second auxiliary position-limiting block 136 is located between two second position-limiting assemblies 13. A side of the second auxiliary position-limiting block 136 facing the placement region 11a is at least configured to simultaneously abut against two adjacent battery cells 20 along the second direction.

The second auxiliary position-limiting block 136 is movable with the mounting plate 134 along the second direction, to maintain abutting against the battery cell 20.

In this way, a position of a part at which a plurality of battery cells 20 are laminated can be limited along the second direction by using the second auxiliary position-limiting block 136, so that a probability that a position at which the battery cells 20 are laminated is detached from the pallet 10 due to a problem such as warping toward the second direction under an abutting force in the first direction is reduced, thereby helping the battery cell 20 be stable on the pallet 10.

It may be understood that, the second auxiliary position-limiting block 136 may alternatively be configured to abut against only one battery cell 20 along the second direction.

A specific quantity of the second auxiliary position-limiting blocks 136 is not limited, and may be one, two, three, or the like.

In some embodiments, refer to FIG. 2 to FIG. 4, the pallet 10 includes a first auxiliary position-limiting block 14. The first auxiliary position-limiting block 14 is disposed in the pallet body 11. The first auxiliary position-limiting block 14 is located between the two parts of the first position-limiting assemblies 12, and located on another side of the placement region 11a opposite to the second position-limiting assembly 13. A side of the first auxiliary position-limiting block 14 facing the placement region 11a is at least configured to simultaneously abut against two adjacent battery cells 20 along the second direction.

In this way, the position of the part at which the plurality of battery cells 20 are laminated can be limited along the second direction by using the first auxiliary position-limiting block 14, so that the probability that the position at which the battery cells 20 are laminated is detached from the pallet 10 due to the problem such as warping toward the second direction under the abutting force in the first direction is reduced, thereby helping the battery cell 20 be stable on the pallet 10.

It may be understood that, the first auxiliary position-limiting block 14 may alternatively be configured to abut against only one battery cell 20 along the second direction.

A specific quantity of the first auxiliary position-limiting blocks 14 is not limited, and may be one, two, three, or the like.

Refer to FIG. 1 to FIG. 5, the pallet 10 in this embodiment of the present disclosure is specifically described as follows:

The pallet 10 includes the pallet body 11, the second position-limiting assembly 13, the at least two first position-limiting assemblies 12, and the linkage assembly 15. The first position-limiting assemblies 12 are disposed on the pallet body 11. The plurality of first position-limiting assemblies 12 are divided into the two parts each disposed on one side of the placement region 11a along the first direction. The first position-limiting assemblies 12 include the first position-limiting block 121 that is movable along the first direction, the first elastic assembly 122, and the plurality of supporting blocks 123. The first position-limiting block 121 is provided with the first position-limiting surface 121a configured to abut against the battery cell 20 along the first direction and the second position-limiting surface 121b configured to abut against the battery cell 20 along the second direction. The second position-limiting assembly 13 is disposed in the pallet body 11. The second position-limiting assembly 13 is disposed on the side of the placement region 11a along the second direction. The second position-limiting assembly 13 includes the second position-limiting block 131 that is movable along the second direction, the second elastic assembly 132, the mounting plate 134, and the second auxiliary position-limiting block 136. The second position-limiting block 131 is provided with the third position-limiting surface 131a configured to abut against the battery cell 20 along the second direction. The second position-limiting surface 121b and the third position-limiting surface 131a are respectively located on the opposite sides of the placement region 11a along the second direction. The pallet body 11 includes the carrying plate 111 and the placement block 112. The placement block 112 is located on the upper surface of the carrying plate 111. The placement region 11a is formed on the upper surface of the placement block 112. The first elastic assembly 122 includes the adapter plate 1221, the gas spring 1222, and the first toggle member 1223. The piston cylinder 1222a of the gas spring 1222 is disposed in the pallet body 11. The adapter plate 1221 extends along the first direction. One end of the adapter plate 1221 along the first direction is connected to the piston rod 1222b of the gas spring 1222, and the other end of the adapter plate 1221 is connected to the first position-limiting block 121. The projection of the adapter plate 1221 at least partially coincides with the projection of the gas spring 1222 in the projection plane perpendicular to the first direction, and the adapter plate 1221 is located above the gas spring 1222. The supporting blocks 123 extend along the first direction and are disposed on the upper surface of the carrying plate 111. The supporting blocks 123 are arranged at intervals perpendicularly to the first direction. The first position-limiting block 121 is disposed on the upper surfaces of the supporting blocks 123 and slidably fitted to the supporting blocks 123. At least a part of the placement block 112 is located between the supporting blocks 123. The first position-limiting block 121 includes the mounting base 1211, the first position-limiting portion 1212, and the second position-limiting portion 1213. The first position-limiting portion 1212 is located on the side of the mounting base 1211 facing the placement region 11a. The first position-limiting portion 1212 extends perpendicularly to the first direction. The first position-limiting surface 121a is formed on the surface of the first position-limiting portion 1212 facing the placement region 11a. The second position-limiting portion 1213 is disposed on the mounting base 1211 and located on the end of the first position-limiting portion 1212 away from the second position-limiting assembly 13. The second position-limiting surface 121b is formed on the surface of the second position-limiting portion 1213 facing the placement region 11a. The second elastic assembly 132 includes the driving block 1321, the fixing base 1322, and the spring 1323. The fixing base 1322 is disposed in the pallet body 11. The spring 1323 is clamped between the fixing base 1322 and the driving block 1321 along the second direction. The driving block 1321 forms the second driving end 132a. The mounting plate 134 is movable relative to the pallet body 11 along the second direction. There are the plurality of second position-limiting blocks 131 that are disposed on the mounting plate 134. The plurality of second position-limiting blocks 131 are arranged at intervals perpendicularly to the second direction. The second auxiliary position-limiting block 136 is disposed on the mounting plate 134. The second auxiliary position-limiting block 136 is located between the two second position-limiting assemblies 13. The side of the second auxiliary position-limiting block 136 facing the placement region 11a is at least configured to simultaneously abut against two adjacent battery cells 20 along the second direction. The pallet body 11 is provided with the avoidance hole 11b formed therethrough. The second position-limiting assembly 13 includes the second toggle member 135. The second toggle member 135 is disposed on the mounting plate 134. The projection of the second toggle member 135 at least partially coincides with the projection of the avoidance hole 11b in the projection plane perpendicular to the direction in which the avoidance hole 11b is formed through the pallet body 11. The mounting plate 134 extends along the first direction, and the second position-limiting blocks 131 are slidably fitted to the mounting plate 134 along the first direction. The linkage assembly 15 includes the guiding member 151 and the restraining member 152. One of the guiding member 151 and the restraining member 152 is disposed in the first position-limiting block 121, and the other of the guiding member 151 and the restraining member 152 is disposed in the second position-limiting block 131. The guiding member 151 is provided with the guiding slot 151a. The guiding slot 151a extends along the second direction. The restraining member 152 is embedded in the guiding slot 151a. The restraining member 152 is in stopping fit with the inner wall of the guiding slot 151a. The restraining member 152 is configured to be rotatable relative to the inner wall of the guiding slot 151a.

An embodiment of the present disclosure further provides a battery production line, configured to produce a battery. Refer to FIG. 6, the battery production line includes a first toggle assembly 30, a second toggle assembly 40, and the pallet 10 in any one of the foregoing embodiments.

The first toggle assembly 30 is configured to selectively push the first position-limiting block 121 to move along the first direction. The second toggle assembly 40 is configured to selectively push the second position-limiting block 131 to move along the second direction.

In this way, the first toggle assembly 30 pushes the first position-limiting block 121 to move, to adjust a distance along the first direction between first position-limiting surfaces 121a that are located on two sides of the placement region 11a along the first direction, so that the pallet 10 can satisfy position-limiting requirements of battery cells 20 of different types and quantities along the first direction. The second toggle assembly 40 pushes the second position-limiting block 131 to move, to adjust a distance along the second direction between the second position-limiting surface 121b and the third position-limiting surface 131a that are located on two sides of the placement region 11a along the second direction, so that the pallet 10 can satisfy position-limiting requirements of battery cells 20 of different types and quantities along the second direction. Therefore, battery cells 20 of different types and quantities are carried and fixed on the pallet 10, and a use scenario of the pallet 10 is expanded, thereby facilitating implementation of flexible production.

It may be understood that a specific manner in which the first toggle assembly 30 pushes the first position-limiting block 121 is not limited, and may be that the first toggle assembly 30 is in direct contact with the first position-limiting block 121 to push the first position-limiting block 121, or that the first toggle assembly 30 pushes another component, such as the first toggle member 1223, to transmit a pushing force to the first position-limiting block 121, so as to move the first position-limiting block 121.

It may be understood that a specific manner in which the second toggle assembly 40 pushes the second position-limiting block 131 is not limited, and may be that the second toggle assembly 40 is in direct contact with the second position-limiting block 131 to push the second position-limiting block 131, or that the second toggle assembly 40 pushes another component, such as the second toggle member 135, to transmit a pushing force to the second position-limiting block 131, so as to move the second position-limiting block 131.

It may be understood that, when the first position-limiting block 121 and the second position-limiting block 131 respectively abut against the battery cell 20, the first toggle assembly 30 no longer pushes the first position-limiting block 121, but is separated from the first position-limiting block 121; and the second toggle assembly 40 no longer pushes the second position-limiting block 131, but is separated from the second position-limiting block 131. In this way, the pallet 10 is enabled to smoothly move, but does not interfere with the first toggle assembly 30 and the second toggle assembly 40.

A specific structure of the first toggle assembly 30 is not limited.

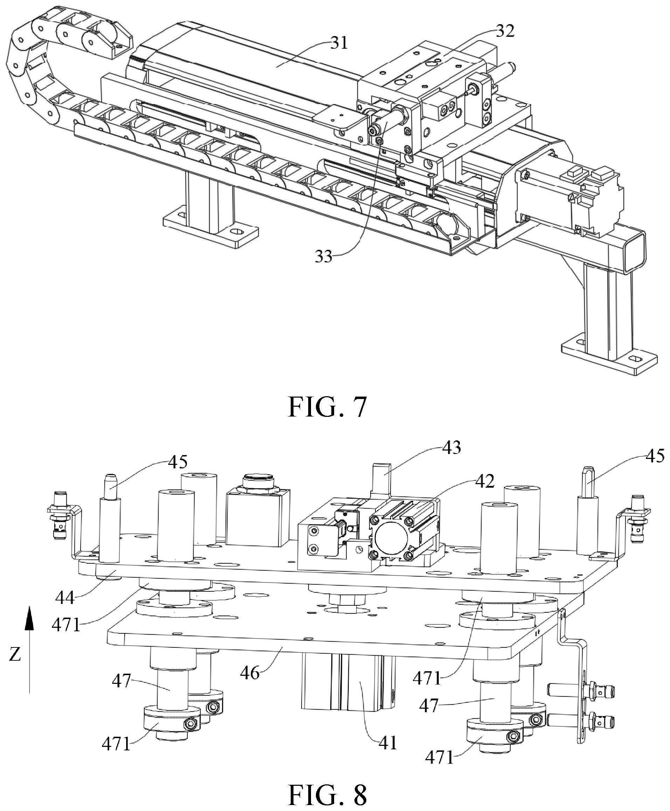

For example, refer to FIG. 7, the first toggle assembly 30 is disposed on a side of the pallet 10 perpendicular to the first direction. The first toggle assembly 30 includes a first driving member 31, a second driving member 32, and a first pushing member 33. The second driving member 32 is disposed at a driving end of the first driving member 31, to drive the second driving member 32 to move along the first direction. The first pushing member 33 is disposed at a driving end of the second driving member 32, to drive the first pushing member 33 to stretch or retract perpendicularly to the first direction. The first pushing member 33 can drive the first position-limiting block 121 to move along the first direction when the first pushing member 33 is stretched.

The stretched first pushing member 33 can abut against a component in the first position-limiting assembly 12 along the first direction, so that a force transmission path is formed between the first pushing member 33 and the first position-limiting block 121. The first pushing member 33 is enabled, through driving by the first driving member 31 along the first direction, to transmit a pushing force to the first position-limiting block 121, so as to move the first position-limiting block 121. In addition, the first pushing member 33 is enabled, through driving of the second driving member 32, to interrupt the force transmission path with the first position-limiting block 121, so as to enable a position of the first position-limiting block 121 to be stable or enable the first position-limiting block 121 to abut against the battery cell 20.

In this way, through fit between the first driving member 31 and the second driving member 32, the first pushing member 33 selectively pushes the first position-limiting block 121 to move along the first direction.

A specific type of the first driving member 31 is not limited, which is, for example, a timing belt linear module, a ball screw linear module, a linear motor, or a sliding table cylinder.

A specific type of the second driving member 32 is not limited, which is, for example, a timing belt linear module, a ball screw linear module, a linear motor, or a sliding table cylinder.

A specific structure of the second toggle assembly 40 is not limited.

For example, refer to FIG. 6, the second toggle assembly 40 is disposed below the pallet 10. The second toggle assembly 40 includes a third driving member 41, a fourth driving member 42, and a second pushing member 43. The fourth driving member 42 is in driving connection with a driving end of the third driving member 41, to drive the fourth driving member 42 to stretch or retract in a third direction. The second pushing member 43 is disposed at a driving end of the fourth driving member 42, to drive the second pushing member 43 to move along the second direction. The second pushing member 43 drives the second position-limiting block 131 to move along the second direction when the third driving member 41 is upward stretched. The first direction and the second direction are both orthogonal to the third direction.

The stretched second pushing member 43 can abut against a component in the first position-limiting assembly 12 along the second direction, so that a force transmission path is formed between the second pushing member 43 and the second position-limiting block 131. The second pushing member 43 is enabled, through driving by the fourth driving member 42 along the second direction, to transmit a pushing force to the second position-limiting block 131, so as to move the second position-limiting block 131. In addition, the second pushing member 43 is enabled, through driving of the third driving member 41, to interrupt the force transmission path with the second position-limiting block 131, so as to enable a position of the second position-limiting block 131 to be stable or enable the second position-limiting block 131 to abut against the battery cell 20.

In this way, through fit between the third driving member 41 and the fourth driving member 42, the second pushing member 43 selectively pushes the second position-limiting block 131 to move along the second direction.

A specific type of the third driving member 41 is not limited, which is, for example, a timing belt linear module, a ball screw linear module, a linear motor, or a sliding table cylinder.

A specific type of the fourth driving member 42 is not limited, which is, for example, a timing belt linear module, a ball screw linear module, a linear motor, or a sliding table cylinder.

It may be understood that, in a process in which the first toggle assembly 30 and the second toggle assembly 40 respectively drive the first position-limiting block 121 and the second position-limiting block 131 to move, a position of the pallet 10 needs to be maintained stable.

In some embodiments, the third direction is a gravity direction.

In some embodiments, refer to FIG. 8, the pallet 10 is provided with a positioning hole 10a formed therethrough. The second toggle assembly 40 includes a mounting member 44 and a positioning pin 45. The fourth driving member 42 and the positioning pin 45 are both disposed on an upper surface of the mounting member 44. A lower surface of the mounting member 44 is connected to the driving end of the third driving member 41. The positioning pin 45 extends along the third direction. The positioning pin 45 is inserted into the positioning hole 10a when the third driving member 41 is upward stretched.

In this way, through stopping fit between the positioning pin 45 and an inner wall of the positioning hole 10a, a movement tendency of the pallet 10 in any direction perpendicular to the third direction is suppressed, so that a position of the pallet 10 maintains stable.

It may be understood that a quantity of positioning pins 45 is not limited, and may be one, two, four, or the like.

In some embodiments, refer to FIG. 8, there are two positioning pins 45, and the positioning pins 45 are diagonally arranged relative to the first direction and the second direction.

That the positioning pins 45 are diagonally arranged relative to the first direction and the second direction means that the two positioning pins 45 are arranged spaced away along the first direction and are arranged spaced away along the second direction.

In this way, an effect of positioning the pallet 10 by the positioning pins 45 is improved, and a tendency of rotation of the pallet 10 is suppressed.

In some embodiments, refer to FIG. 8, one of the two positioning pins 45 is a cylindrical pin, and the other of the two positioning pins 45 is a rhombic pin, to avoid a case in which the positioning pins 45 and the pallet 10 are positioned, and reduce a probability that a position error between the two positioning pins 45 affects respective fit with the positioning hole 10a.

In some embodiments, refer to FIG. 8, the second toggle assembly 40 includes a fixing member 46 and a guiding rod 47. The fixing member 46 is fixedly disposed and located below the mounting member 44. The guiding rod 47 extends along the third direction. A top end of the guiding rod 47 is connected to the mounting member 44. The guiding rod 47 penetrates through the fixing member 46. The guiding rod 47 is provided with two stopping protrusions 471. The two stopping protrusions 471 are arranged spaced away along the third direction. The fixing member 46 is located between the two stopping protrusions 471 and abuts against one of the stopping protrusions 471.

In this way, on one hand, movement of the mounting member 44 along the third direction is guided by using the guiding column, so that a probability that the positioning pin 45 cannot coordinate with the positioning hole 10a due to deviated movement of the mounting member 44 is reduced. On the other hand, a stroke of the movement of the mounting member 44 along the third direction is limited by using the stopping protrusions 471, so that the mounting member 44 does not collide with the pallet 10 along the third direction.

A specific quantity of the guiding rods 47 is not limited, which is, for example, two, three, or four.

A specific manner in which the fixing member 46 is fixed is not limited. For example, the fixing member 46 is disposed on a rack that is fixed to the ground.

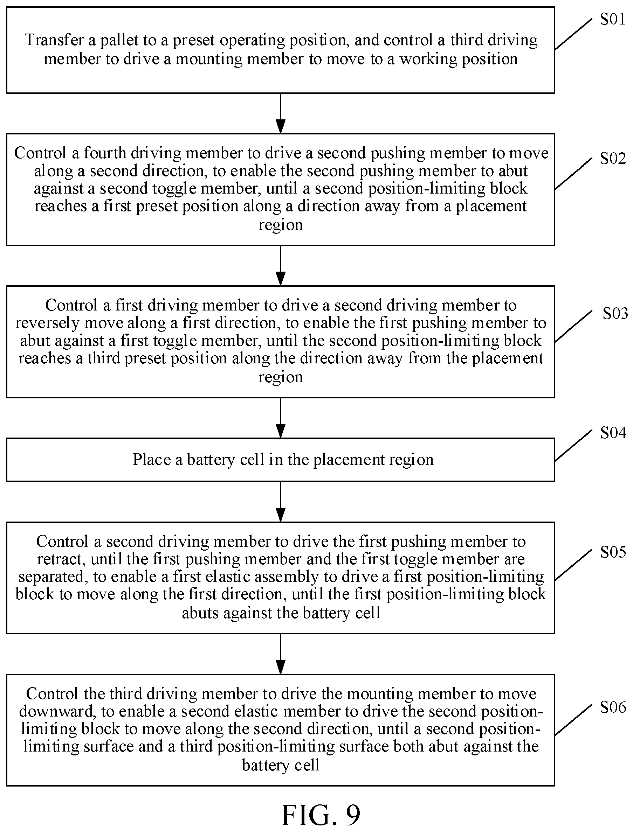

An embodiment of the present disclosure further provides a control method applied to the battery production line in the foregoing embodiment. The control method is applied to a control device. A specific type of the control device is not limited, which is, for example, a PLC (Programmable Logic Controller, programmable logic controller) device or an industrial computer. Refer to FIG. 9, the control method includes the following steps.

Step S01: Transfer a pallet to a preset operating position, and control a third driving member to drive a mounting member to move to a working position.

In other words, the pallet 10 is fixed through movement of the mounting member 44, and the second pushing member 43 can abut against the second toggle member 135 along the second direction.

Step S02: Control a fourth driving member to drive a second pushing member to move along a second direction, to enable the second pushing member to abut against a second toggle member, until a second position-limiting block reaches a first preset position along a direction away from a placement region.

In this way, the second position-limiting block 131 moves along the direction away from the placement region 11a until the second position-limiting block 131 reaches the first preset position.

The first preset position refers to a position of the second position-limiting block 131 when a distance along the second direction between the second position-limiting surface 121b and the third position-limiting surface 131a is not less than a total dimension along the second direction of the battery cell 20 that needs to be placed.

Step S03: Control a first driving member to drive a second driving member to reversely move along a first direction, to enable the first pushing member to abut against a first toggle member, until the second position-limiting block reaches a third preset position along the direction away from the placement region.

The third preset position refers to a position of the first position-limiting block 121 when a distance along the first direction between first position-limiting surfaces 121a that are located on two sides of the placement region 11a along the first direction is not less than a total dimension along the first direction of the battery cell 20 that needs to be placed.

Step S04: Place a battery cell in the placement region.

Step S05: Control a second driving member to drive the first pushing member to retract, until the first pushing member and the first toggle member are separated, to enable a first elastic assembly to drive a first position-limiting block to move along the first direction, until the first position-limiting block abuts against the battery cell.

After the first pushing member 33 and the first toggle member 1223 are separated, elastic potential energy of the first elastic assembly 122 is released, to drive the first position-limiting block 121 to move toward the battery cell 20, until the first position-limiting surface 121a abuts against the battery cell 20 along the first direction.

Step S06: Control the third driving member to drive the mounting member to move downward, to enable a second elastic member to drive the second position-limiting block to move along the second direction, until a second position-limiting surface and a third position-limiting surface both abut against the battery cell.

After the second pushing member 43 and the second toggle member 135 are separated, elastic potential energy of the second elastic assembly 132 is released, to drive the second position-limiting block 131 to move toward the battery cell 20, until the second position-limiting surface 121b and the third position-limiting surface 131a both abut against the battery cell 20.

According to the control method in this embodiment of the present disclosure, an objective that the first position-limiting block 121 and the second position-limiting block 131 both abut against the battery cell 20 to limit movement of the battery cell 20 is achieved, and the control method is adapted to placement of battery cells 20 of different dimensions and quantities on the pallet 10.

It may be understood that step S02 and step S03 may be synchronously performed, or may be performed in a sequence, and the sequence is not limited.

In some embodiments, the pallet is provided with a positioning hole formed therethrough. A second toggle assembly includes a positioning pin. The positioning pin is inserted into the positioning hole when the mounting member is located at the working position.

In this way, stopping fit is implemented between the positioning pin 45 and an inner wall of the positioning hole 10a, so that a position of the pallet 10 maintains stable.

In some embodiments, a projection of the second pushing member at least partially coincides with a projection of the second toggle member in a projection plane perpendicular to the second direction when the mounting member is located at the working position.

In this way, after moving along the second direction, the second pushing member 43 can abut against the second toggle member 135, so that the second toggle member 135 is pushed to move.

In some embodiments, before the controlling a first driving member to drive a first pushing member to reversely move along a first direction, the control method further includes:
controlling the first driving member to drive the second driving member to forwardly move along the first direction to a second preset position; and
controlling the second driving member to drive the first pushing member to stretch, to enable a projection of the first pushing member to at least partially coincide with a projection of the first toggle member in a projection plane perpendicular to the first direction.

The second preset position refers to a position enabling the first pushing member 33 to be located on a side of a position at which the first toggle member 1223 is naturally stretched along the first direction along a stretching direction of the first toggle member 1223.

In this way, the first pushing member 33 can abut against the first toggle member 1223 along the first direction.

The embodiments/implementations provided in the present disclosure may be combined with each other when there is no contradiction.

The foregoing descriptions are merely exemplary embodiments of the present disclosure, but are not intended to limit the present disclosure. The present disclosure may include various modifications and changes for a person skilled in the art. Any modification, equivalent replacement, or improvement made within the spirit and principle of the present disclosure shall fall within the protection scope of the present disclosure.

## Claims

1. A pallet, configured to place a battery cell, wherein the pallet comprises:
a pallet body, comprising a placement region configured to place the battery cell;
at least two first position-limiting assemblies, disposed in the pallet body, wherein one part of the first position-limiting assemblies is disposed on one side of the placement region along a first direction, and the other part of the first position-limiting assemblies is disposed on the other side, the first position-limiting assemblies each comprise a first elastic assembly and a first position-limiting block that is movable along the first direction, the first position-limiting block is provided with a first position-limiting surface configured to abut against the battery cell along the first direction and a second position-limiting surface configured to abut against the battery cell along a second direction, the first elastic assembly is disposed in the pallet body, the first elastic assembly comprises a first driving end that is elastically telescopic along the first direction, and the first driving end is in driving connection with the first position-limiting block; and
a second position-limiting assembly, disposed in the pallet body, wherein the second position-limiting assembly is disposed on a side of the placement region along the second direction, the second position-limiting assembly comprises a second position-limiting block that is movable along the second direction, and the second position-limiting block is provided with a third position-limiting surface configured to abut against the battery cell along the second direction, wherein
the second position-limiting surface and the third position-limiting surface are respectively located on opposite sides of the placement region along the second direction, and the first direction intersects with the second direction.

2. The pallet according to claim 1, wherein the first elastic assembly comprises an adapter plate and a gas spring, a piston cylinder of the gas spring is disposed in the pallet body, the adapter plate extends along the first direction, one end of the adapter plate along the first direction is connected to a piston rod of the gas spring, the other end of the adapter plate is connected to the first position-limiting block, to enable the adapter plate to form the first driving end, and a projection of the adapter plate at least partially coincides with a projection of the gas spring in a projection plane perpendicular to the first direction.

3. The pallet according to claim 2, wherein the adapter plate is located above the gas spring.

4. The pallet according to claim 2 or 3, wherein the first elastic assembly comprises a first toggle member, and the first toggle member is disposed on the adapter plate and rotatably connected to the adapter plate.

5. The pallet according to any one of claims 1 to 4, wherein the second position-limiting assembly comprises a second elastic assembly, the second elastic assembly is disposed in the pallet body, the second elastic assembly comprises a second driving end that is elastically telescopic along the second direction, and the second driving end is in driving connection with the second position-limiting block.

6. The pallet according to claim 5, wherein the second elastic assembly comprises a driving block, a fixing base, and a spring, the fixing base is disposed in the pallet body, the spring is clamped between the fixing base and the driving block along the second direction, and the driving block forms the second driving end.

7. The pallet according to any one of claims 1 to 6, wherein the pallet body comprises a carrying plate and a placement block, the placement block is located on an upper surface of the carrying plate, and the placement region is formed on an upper surface of the placement block.

8. The pallet according to claim 7, wherein the first position-limiting assemblies comprise a plurality of supporting blocks, the supporting blocks extend along the first direction and are disposed on the upper surface of the carrying plate, the supporting blocks are arranged at intervals perpendicularly to the first direction, the first position-limiting block is disposed on upper surfaces of the supporting blocks and slidably fitted to the supporting blocks, and at least a part of the placement block is located between the supporting blocks.

9. The pallet according to any one of claims 1 to 8, wherein the first position-limiting block comprises a mounting base, a first position-limiting portion, and a second position-limiting portion, the first position-limiting portion is located on a side of the mounting base facing the placement region, the first position-limiting portion extends perpendicularly to the first direction, the first position-limiting surface is formed on a surface of the first position-limiting portion facing the placement region, the second position-limiting portion is disposed on the mounting base and located on an end of the first position-limiting portion away from the second position-limiting assembly, and the second position-limiting surface is formed on a surface of the second position-limiting portion facing the placement region.

10. The pallet according to claim 1, wherein the second position-limiting assembly comprises a mounting plate, the mounting plate is movable relative to the pallet body along the second direction, there are a plurality of second position-limiting blocks that are disposed on the mounting plate, and the plurality of second position-limiting blocks are arranged at intervals perpendicularly to the second direction.

11. The pallet according to claim 10, wherein the pallet body is provided with an avoidance hole formed therethrough, the second position-limiting assembly comprises a second toggle member, the second toggle member is disposed on the mounting plate, and a projection of the second toggle member at least partially coincides with a projection of the avoidance hole in a projection plane perpendicular to a direction in which the avoidance hole is formed through the pallet body.

12. The pallet according to claim 10 or 11, wherein the mounting plate extends along the first direction, and the second position-limiting blocks are slidably fitted to the mounting plate along the first direction.

13. The pallet according to claim 12, wherein the pallet comprises a linkage assembly, the linkage assembly comprises a guiding member and a restraining member, one of the guiding member and the restraining member is disposed in the first position-limiting block, the other of the guiding member and the restraining member is disposed in the second position-limiting block, the guiding member is provided with a guiding slot, the guiding slot extends along the second direction, the restraining member is embedded in the guiding slot, and the restraining member is in stopping fit with an inner wall of the guiding slot.

14. The pallet according to claim 13, wherein the restraining member is configured to be rotatable relative to the inner wall of the guiding slot.

15. The pallet according to any one of claims 10 to 14, wherein the second position-limiting assembly comprises a second auxiliary position-limiting block, the second auxiliary position-limiting block is disposed on the mounting plate, the second auxiliary position-limiting block is located between two second position-limiting assemblies, and a side of the second auxiliary position-limiting block facing the placement region is at least configured to simultaneously abut against two adjacent battery cells along the second direction.

16. The pallet according to any one of claims 1 to 15, wherein the pallet comprises a first auxiliary position-limiting block, the first auxiliary position-limiting block is disposed in the pallet body, the first auxiliary position-limiting block is located between the two parts of the first position-limiting assemblies, and located on another side of the placement region opposite to the second position-limiting assembly, and a side of the first auxiliary position-limiting block facing the placement region is at least configured to simultaneously abut against two adjacent battery cells along the second direction.

17. A battery production line, configured to produce a battery, wherein the battery production line comprises:
the pallet according to any one of claims 1 to 16;
a first toggle assembly, configured to selectively push the first position-limiting block to move along the first direction; and
a second toggle assembly, configured to selectively push the second position-limiting block to move along the second direction.

18. The battery production line according to claim 17, wherein the first toggle assembly is disposed on a side of the pallet perpendicular to the first direction, the first toggle assembly comprises a first driving member, a second driving member, and a first pushing member, the second driving member is disposed at a driving end of the first driving member, to drive the second driving member to move along the first direction, the first pushing member is disposed at a driving end of the second driving member, to drive the first pushing member to stretch or retract perpendicularly to the first direction, and the first pushing member drives the first position-limiting block to move when the first pushing member is stretched.

19. The battery production line according to claim 17 or 18, wherein the second toggle assembly is disposed below the pallet, the second toggle assembly comprises a third driving member, a fourth driving member, and a second pushing member, the fourth driving member is in driving connection with a driving end of the third driving member, to drive the fourth driving member to stretch or retract in a third direction, the second pushing member is disposed at a driving end of the fourth driving member, to drive the second pushing member to move along the second direction, the second pushing member drives the second position-limiting block to move along the second direction when the third driving member is upward stretched, and the first direction and the second direction are both orthogonal to the third direction.

20. The battery production line according to claim 19, wherein the pallet is provided with a positioning hole formed therethrough, the second toggle assembly comprises a mounting member and a positioning pin, the fourth driving member and the positioning pin are both disposed on an upper surface of the mounting member, a lower surface of the mounting member is connected to the driving end of the third driving member, the positioning pin extends along the third direction, and the positioning pin is inserted into the positioning hole when the third driving member is upward stretched.

21. The battery production line according to claim 20, wherein the second toggle assembly comprises a fixing member and a guiding rod, the fixing member is fixedly disposed and located below the mounting member, the guiding rod extends along the third direction, a top end of the guiding rod is connected to the mounting member, the guiding rod penetrates through the fixing member, the guiding rod is provided with two stopping protrusions, the two stopping protrusions are arranged spaced away along the third direction, and the fixing member is located between the two stopping protrusions and abuts against one of the stopping protrusions.

22. A control method, applied to the battery production line according to claim 17, wherein the control method comprises:
transferring a pallet to a preset operating position, and controlling a third driving member to drive a mounting member to move to a working position;
controlling a fourth driving member to drive a second pushing member to move along a second direction, to enable the second pushing member to abut against a second toggle member, until a second position-limiting block reaches a first preset position along a direction away from a placement region;
controlling a first driving member to drive a first pushing member to reversely move along a first direction, to enable the first pushing member to abut against a first toggle member, until the second position-limiting block reaches a third preset position along the direction away from the placement region;
placing a battery cell in the placement region;
controlling a second driving member to drive the first pushing member to retract, until the first pushing member and the first toggle member are separated, to enable a first elastic assembly to drive a first position-limiting block to move along the first direction, until the first position-limiting block abuts against the battery cell; and
controlling the third driving member to drive the mounting member to move downward, until the second pushing member and the second toggle member are separated, to enable a second elastic member to drive the second position-limiting block to move along the second direction, until a second position-limiting surface and a third position-limiting surface both abut against the battery cell.

23. The control method according to claim 22, wherein the pallet is provided with a positioning hole formed therethrough, a second toggle assembly comprises a positioning pin, and the positioning pin is inserted into the positioning hole when the mounting member is located at the working position.

24. The control method according to claim 22 or 23, wherein a projection of the second pushing member at least partially coincides with a projection of the second toggle member in a projection plane perpendicular to the second direction when the mounting member is located at the working position.

25. The control method according to any one of claims 22 to 24, wherein before the controlling a first driving member to drive a first pushing member to reversely move along a first direction, the control method further comprises:
controlling the first driving member to drive the second driving member to forwardly move along the first direction to a second preset position; and
controlling the second driving member to drive the first pushing member to stretch, to enable a projection of the first pushing member to at least partially coincide with a projection of the first toggle member in a projection plane perpendicular to the first direction.
